# EUROPEAN PATENT APPLICATION

(11) **EP 2 644 866 A2**
(43) Date of publication of application: **02.10.2013**
(21) Application number: 13155604.5
(22) Date of filing: 18.02.2013
(51) Int. Cl.: F02C 7/32

(54) **Multi-shaft power extraction from gas turbine engine**

(30) Priority: 26.03.2012 US 201213429703
(71) Applicant: Hamilton Sundstrand Corporation, Windsor Locks, CT 06096-1010 (US)
(72) Inventor: Hoppe, Richard John, Madison, WI 53711 (US)
(74) Representative: Bridge, Kerry Ann

(57) **Abstract**

A gas turbine engine power generation system includes first, 14, and second, 24, spools respectively connected to first and second turbine sections. First, 36, and second, 38, shafts respectively are coupled to the first, 14, and second, 24, spools. First and second generators, 148, 150, respectively are configured to provide first and second electrical powers. A generator gearbox, 252, operatively connects the first, 36, and second, 38, shafts respectively to the first, 148, and second, 150, generators, An electrical summing device, 54, is electrically connected to the first, 148, and second, 150, generators and is configured to receive the first and second electrical powers and combine the first and second electrical powers to produce a common output power.

## Description

### BACKGROUND

This disclosure relates to a gas turbine engine power generation system, and more particularly, for a multi-shaft power extraction arrangement.

Modem aircraft demand significant power from the gas turbine engine to power secondary loads. Increases in electrical power for passenger features, avionics, hydraulics and engine support loads have increased power demands. Engine bleed air usage reductions have also caused an increased demand for electrical power.

Providing an efficient design scheme capable of extracting sufficient power can be difficult.

### SUMMARY

In one exemplary embodiment, a gas turbine engine power generation system includes first and second spools respectively connected to first and second turbine sections. First and second shafts respectively are coupled to the first and second spools. First and second generators respectively are configured to provide first and second electrical powers. A generator gearbox operatively connects the first and second shafts respectively to the first and second generators. An electrical summing device is electrically connected to the first and second generators and is configured to receive the first and second electrical powers and combine the first and second electrical powers to produce a common output power.

In a further embodiment of any of the above, the first and second shafts are coaxial with one another.

In a further embodiment of any of the above, the first and second spools are respectively low and high speed spools, The first and second shafts respectively have first and second input bevel gears coupled to corresponding gears on the low and high speed spools, The first and second input gears and corresponding gears are arranged in a common gearbox.

In a further embodiment of any of the above, the generator gearbox includes an epicyclic gear train combining input from the first and second shafts and produces a common output connected to one of the first and second generators.

In another exemplary embodiment, a gas turbine engine power generation system includes first and second spools respectively connected to first and second turbine sections. First and second shafts respectively are coupled to the first and second spools. A generator is provided, and a generator gearbox includes at least one epicyclic gear train combining input from the first and second shafts and produces a common output connected to the generator.

In a further embodiment of any of the above, the epicyclic gear train is a simple planetary gear train including a sun gear, a ring gear and planetary gears arranged between and intermeshing with the sun gear and the ring gear.

In a further embodiment of any of the above, the first shaft is coupled to the sun gear and the second shaft is coupled to the ring gear, and the planetary gears are supported by a carrier that provides the common output.

In a further embodiment of any of the above, the first shaft is coupled to the sun gear, the second shaft is coupled to a carrier that supports the planetary gears, and the ring gear provides the common output.

In a further embodiment of any of the above, the epicyclic gear train transfers load between the first and second spools.

In a further embodiment of any of the above, the first and second shafts are coaxial with one another.

In a further embodiment of any of the above, the first and second spools are respectively low and high speed spools, The first and second shafts respectively have first and second input bevel gears coupled to corresponding gears on the low and high speed spools, The first and second input gears and corresponding gears are arranged in a common gearbox.

In a further embodiment of any of the above, a second generator is coupled to at least one of the first and second shafts via a secondary gear train.

In a further embodiment of any of the above, an electrical summing device is electrically connected to the generator and the second generator, which are configured respectively to provide first and second electrical powers. The electrical summing device is configured to combine the first and second electrical powers to produce a common output power.

In a further embodiment of any of the above, only a single generator is provided.

In a further embodiment of any of the above, the generator is also a starter.

### BRIEF DESCRIPTION OF THE DRAWINGS

The disclosure can be further understood by reference to the following detailed description when considered in connection with the accompanying drawings wherein:
Figure 1 is a schematic view of one example gas turbine engine.
Figure 2 is an enlarged schematic view of a gearbox configured to extract power from multiple spools.
Figure 3 is an enlarged view of an example power generation system shown in Figure 1.
Figure 4 is a schematic view of another example power generation system using electrical summing.
Figure 5 is a schematic view of an example power generation system using electrical summing and mechanical summing.
Figure 6 is a schematic view of an example power generation system using mechanical summing.
Figure 7 is a schematic view of another example power generation system using mechanical summing.

### DETAILED DESCRIPTION

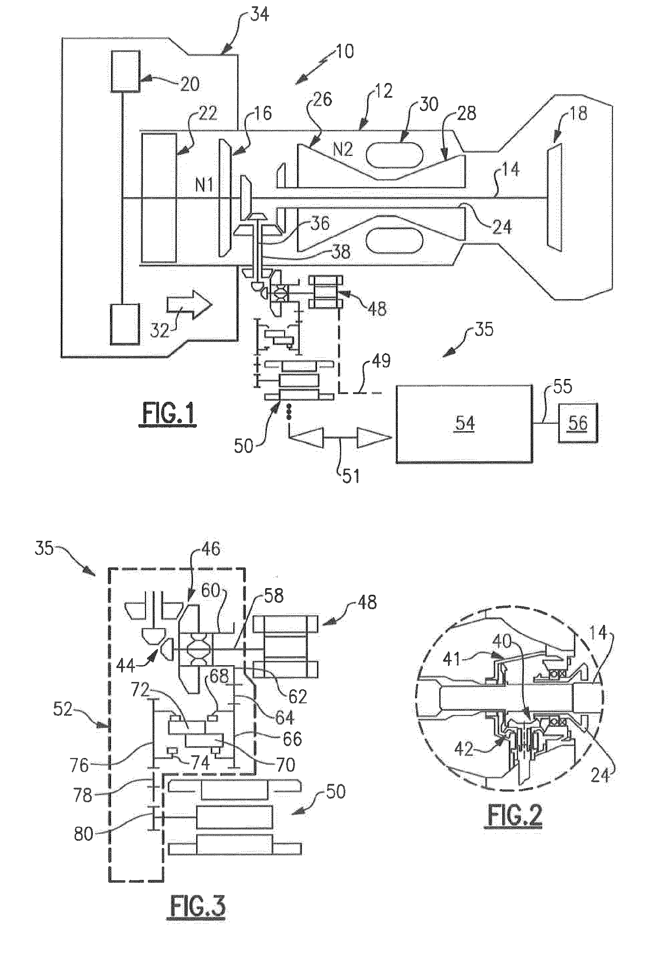

A geared turbofan engine 10 is schematically shown in Figure 1 and is intended to be exemplary only. The engine 10 includes a core nacelle 12 that houses a low speed spool 14 and a high speed spool 24 rotatable about a common axis. The low speed spool 14 supports low pressure compressor and turbine sections 16, 18. In the example, the low speed spool 14 rotationally drives a fan 20 through a fan drive gear system 22, which may include an epicyclic gear train, for example, The high speed spool 24 supports high pressure compressor and turbine sections 26, 28. A combustor section 30 is provided between the high pressure compressor and turbine sections 26, 28.

The core nacelle 12 is supported within a fan nacelle 34. A bypass flow path 32 is provided between the core and fan nacelles 12, 34. Airflow enters the fan nacelle 34 and is expelled from the bypass flow path 32 by the fan 20.

The engine 10 includes a power generation system 35 that extracts power from the low and high speed spools 14, 24, which rotate at significantly different speeds, as the low and high speed spools 14, 24 are rotationally driven by the low and high pressure turbine sections 18, 28. First and second shafts 36, 38 are respectively coupled to the low and high speed spools 14, 24 respectively by first and second sets of input bevel gears 40, 42, as shown in Figure 2. The first and second shafts 36, 38 are coaxial with one another, providing an arrangement that reduces the footprint of the first and second shafts 36, 38 within the flow path of the core and nacelles 12, 34. The first and second sets of input bevel gears 40, 42 are arranged in a common gearbox 41, which provides compact packaging of the gears.

First and second generators 48, 50 respectively are configured to provide first and second electrical powers 49, 51, which are different than one another, in one example, due to the differing rotational speeds of the low and high speed spools 14, 24.

A generator gearbox 52, shown in Figure 3, operatively connects the first and second shafts 36, 38 respectively to the first and second generators 48, 50. The first and second shafts 36, 38 are respectively coupled to first and second output shafts 58, 60 by first and second sets of output bevel gears 44, 46.

In the example shown in Figure 3, the first output shaft 58 is directly coupled to the first generator 48. It should be understood that the term "directly" does not exclude the use of a clutch, for example, between the directly coupled components. A first gear 62 is provided on the second output shaft 60 and intermeshes with a second gear 64. A fourth gear 68 is provided on a third gear 66, which intermeshes with the second gear 64. An eighth gear 76 is provided on a seventh gear 74, which is coupled to the fourth gear 68 via firth 70 and sixth gears 72. The eighth gear 76 drives a tenth gear 80, which directly drives the second generator 50, through a ninth gear 78.

The first and second generators 48, 50 rotate at different speeds. An electrical summing device 54 is electrically connected to the first and second generators 48, 50 and is configured to receive the first and second electrical powers 49, 51 and combine the first and second electrical powers 49, 51 to produce a common output power 55. Examples of commercially available electrical summing devices are manufactured by Hamilton Sundstrand Corporation under part numbers 757183G and 7000045 for the Boeing 777 and 787, respectively. The electrical summing device 54 provides power to loads 56.

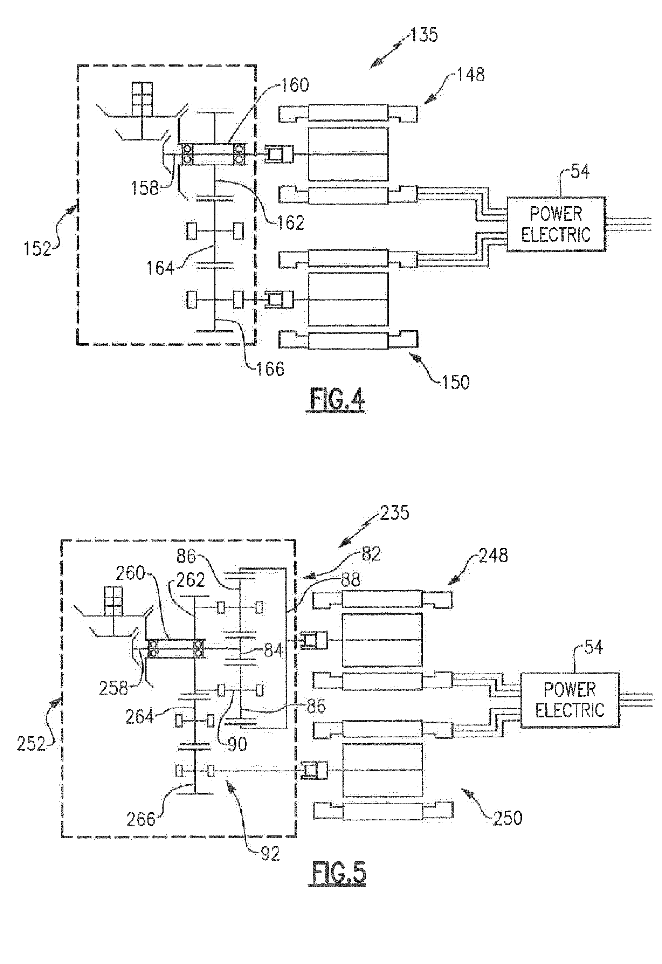

A much-simplified gear train is shown in the power generation system 135 illustrated in Figure 4. The generator gearbox 152 houses a first gear 162 mounted on the second output shaft 160. The first gear 162 drives a third gear 166 via a second gear 164. The first generator 148 is directly coupled to the first output shaft 158, and the second generator 150 is directly coupled to the third gear 166. The electrical summing device 54 receives electrical power from the first and second generators 148, 150.

In the example shown in Figure 5, the generator gearbox 252 includes an epicyclic gear train 82 in the power generation system 235. In the example, the epicyclic gear train 82 is a simple planetary gear train including a sun gear 84, a ring gear 88 and planetary gears 86 arranged between and intermeshing with the sun gear 84 and the ring gear 88. The planetary gears 86 are mounted on a carrier 90. The first output shaft 258 is connected to the sun gear 84. The carrier 90 is connected to the second output shaft 260. The ring gear 88 directly drives the first generator 248. A secondary gear train 92 couples the second generator 250 to the second output shaft 260, which includes a first gear 262. A second gear 264 interconnects the first gear 262 to a third gear 266, which directly drives the second generator 250. The electrical summing device 54 receives electrical power from the first and second generators 248, 250.

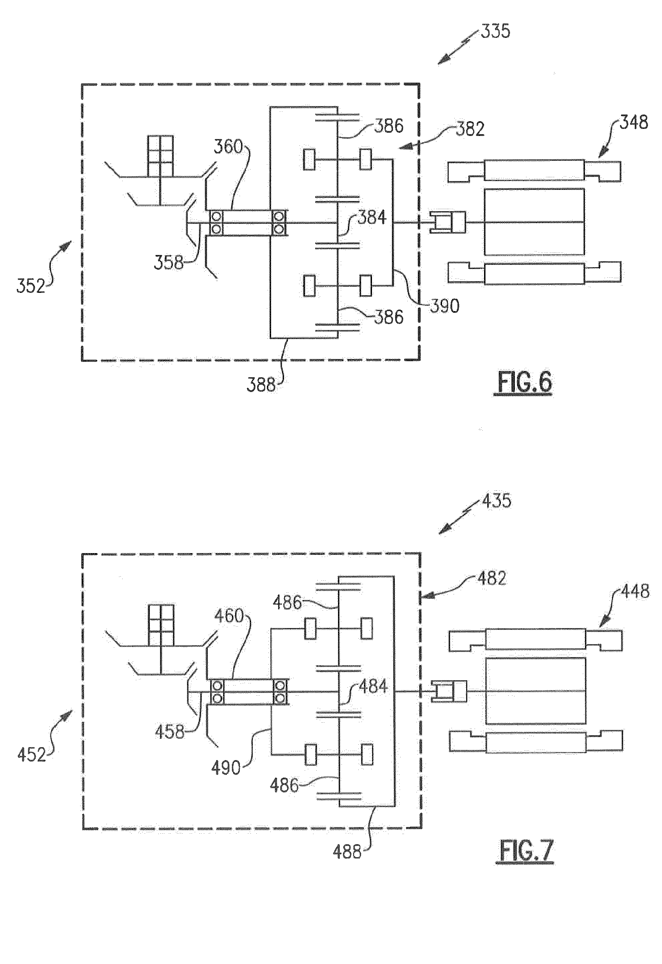

In the examples shown in Figures 6 and 7, the input from the first and second shafts 36, 38 (Figure 1) is combined using a differential simple planetary gear train to produce a common output connected to only one generator 348, 448. By combining the speed of the low and high speed spools 14, 24, a smaller speed range will be produced, which enables a smaller, efficiently sized generator to be used. It should be understood that other gear configurations may be used, such as compound planetary gear trains (e.g., a Ravignencaux arrangement) to mechanically combine the different rotational speeds of the low and high speed spools 14, 24. The epicyclic gear train also transfers load between the low and high speed spools 14, 24, which can improve engine performance,

In the example shown in Figure 6, the power generation system 335 includes a gear box 352 housing a planetary gear strain 382. The planetary gear train 382 includes a sun gear 384, a ring gear 388 and planetary gears 386 arranged between and intermeshing with the sun gear 384 and the ring gear 388, The planetary gears 386 are mounted on a carrier 390, which is connected to the generator 348, The first output shaft 358 is connected to the sun gear 384, The ring gear 88 is connected to the second output shaft 360.

In the example shown in Figure 7, the power generation system 435 includes a gear box 452 housing a planetary gear train 482. The planetary gears 486 are mounted on the carrier 490. The first output shaft 458 is connected to the sun gear 484. The carrier 490 is connected to the second output shaft 240. The ring gear 488 directly drives the generator 448.

Although example embodiments have been disclosed, a worker of ordinary skill in this art would recognize that certain modifications would come within the scope of the claims. For example, it should be understood that the gear configurations disclosed are exemplary, and other gear arrangements may be used and still fall within the claims. In any of the above embodiments, the generators may also be used as a starter, For that reason, the following claims should be studied to determine their true scope and content.

## Claims

1. A gas turbine engine power generation system comprising:
first (14) and second (24) spools respectively connected to First (26) and second (28) turbine sections;
first (36) and second (38) shafts respectively coupled to the first (26) and second (28) spools;
first (48, 148) and second (50, 150) generators respectively configured to provide first and second electrical powers;
a generator gearbox (252) operatively connecting the first (36) and second (38) shafts respectively to the first (48) and second (50) generators; and
an electrical summing device (54) electrically connected to the first (48) and second (50) generators and configured to receive the first (49) and second (51) electrical powers and combine the first and second electrical powers to produce a common output powers

2. The gas turbine engine power generation system 1, wherein the first (36) and second (38) shafts are coaxial with one another.

3. The gas turbine engine power generation system 2, wherein the first (26) and second (28) spools are respectively low and high speed spools, the first (36) and second (38) shafts respectively having first and second input bevel gears coupled to corresponding gears on the low (14) and high (24) speed spools, the first and second input gears and corresponding gears arranged in a common gearbox,

4. The gas turbine engine power generation system 1, wherein the generator gearbox (252) includes an epicyclic gear train (82) combining input from the first (36) and second (38) shafts and producing a common output connected to one of the first (48) and second (50) generators.

5. A gas turbine engine power generation system comprising:
first (14) and second (24) spools respectively connected to first and second turbine sections;
first (36) and second (38) shafts respectively coupled to the first (14) and second (24) spools;
a generator (148); and
a generator gearbox (252) includes at least one epicyclic gear train (82) combining input from the first (36) and second (38) shafts and producing common output connected to the generator.

6. The gas turbine engine power generation system 5, wherein the epicyclic gear train (82) is a simple planetary gear train including a sun gear (84), a ring gear (88) and planetary gears (86) arranged between and intermeshing with the sun gear (84) and the ring gear (88).

7. The gas turbine engine power generation system 6, wherein the first shaft (36) is coupled to the sun gear (84) and the second shaft (38) is coupled to the ring gear (88), and the planetary gears (86) are supported by a carrier that provides the common output.

8. The gas turbine engine power generation system 6, wherein the first shaft (36) is coupled to the sun gear (84), the second shaft (38) is coupled to a carrier that supports the planetary gears (86), and the ring gear (88) provides the common output.

9. The gas turbine engine power generation system 6, wherein the epicyclic gear train (82) transfers load between the first (14) and second (24) spools.

10. The gas turbine engine power generation system 5, wherein the first (36) and second (38) shafts are coaxial with one another.

11. The gas turbine engine power generation system 10, wherein the first (14) and second (24) spools are respectively low and high speed spools, the first (36) and second (38) shafts respectively having first and second input bevel gears coupled to corresponding gears on the low and high speed spools, the first and second input gears and corresponding gears arranged in a common gearbox.

12. The gas turbine engine power generation system 5, comprising a second generator (150) coupled to at least one of the first and second shafts via a secondary gear train.

13. The gas turbine engine power generation system 12, comprising an electrical summing device (54) electrically connected to the generator (48) and the second generator (50) which are configured respectively to provide first and second electrical powers, the electrical summing device (54) configured to combine the first and second electrical powers to produce a common output power.

14. The gas turbine engine power generation system 5, comprising only a single generator.

15. The gas turbine engine power generation system 5, wherein the generator (148) is also a starter,
